# EUROPEAN PATENT SPECIFICATION

(11) **EP 2 027 739 B1**
(45) Date of publication and mention of the grant of the patent: **29.08.2012**
(21) Application number: 07733740.0
(22) Date of filing: 05.06.2007
(51) Int. Cl.: H04W 36/00

(54) **A METHOD OF PACKET SWITCHED HANDOVER**
VERFAHREN FÜR PAKETVERMITTELTE WEITERREICHUNG
PROCÉDÉ DE TRANSFERT INTERCELLULAIRE À COMMUTATION DE PAQUETS

(30) Priority: 09.06.2006 GB 0611343
(43) Date of publication of application: 25.02.2009
(73) Proprietor: SIEMENS AKTIENGESELLSCHAFT, 80333 München (DE)
(72) Inventor: HOLE, David, Southampton SO52 9NP (GB)
(74) Representative: Payne, Janice Julia
(86) International application number: PCT/GB2007/050319
(87) International publication number: WO 2007/141575

(56) References cited:
- EP-A- 1 076 465
- WO-A-01/72081
- IEEE: "IEEE Standard for Local and metropolitan area networks; Part 16: Air Interface for Fixed and Mobile Broadband Wireless Access Systems; Amendment 2: Physical and Medium Access Control Layers for Combined Fixed and Mobile Operation in Licensed Bands and Corrigendum 1" IEEE COMPUTER SOCIETY AND IEEE MICROWAVE THEORY AND TECHNIQUES SOCIETY, [Online] 28 February 2006 (2006-02-28), pages 238-244, XP002450384 Retrieved from the Internet: URL:http://standards.ieee.org/getieee802/d ownload/802.16e-2005.pdf> [retrieved on 2007-09-11]
- 3GPP: "Technical Specification Group GERAN; Packet-switched handover for GERAN A/Gb mode; Stage 2 (Release 6)" 3GPP TS 43.129 V6.7.1, [Online] April 2006 (2006-04), pages 1-71, XP002450385 Retrieved from the Internet: URL:http://www.3gpp.org/ftp/Specs/archive/ 43%5Fseries/43.129/> [retrieved on 2007-09-11]
- HUAWEI: "MS's behavior when can't get uplink radio resource to send PS handover access or RLC/MAC block during PS handover to A/Gb mode" 3GPP TSG-GERAN2 #29BIS, G2-060234, [Online] 22 May 2006 (2006-05-22), - 24 May 2006 (2006-05-24) pages 1-13, XP002450386 Retrieved from the Internet: URL:http://www.3gpp.org/ftp/tsg_geran/Wg2_ Protocol_Aspects/GERAN2_29bis_Sophia-Antip olis/Docs/> [retrieved on 2007-09-11]
- SIEMENS: "Maintenance of Packet Resources in Source Cell during PS Handover" 3GPP TSG-GERAN #31, GP-061890, [Online] 4 September 2006 (2006-09-04), - 8 September 2006 (2006-09-08) pages 1-7, XP002450387 Retrieved from the Internet: URL:http://www.3gpp.org/ftp/tsg_geran/TSG_ GERAN/GERAN_31_Denver/Docs/> [retrieved on 2007-09-11]

## Description

This invention relates to a method of packet switched handover in a mobile communication system, in particular for mobile devices moving between cells in a network, or between one network and another.

The present invention addresses problems which arise in the handover of a mobile device from one cell to another in a 2G/3G radio access network (RAN), when that mobile device has ongoing packet-switched (PS) resources allocated to it. In existing standards, such as global system for mobile communication (GSM) enhanced data rates for global evolution (EDGE) RAN (GERAN), procedures have been defined for PS handover, which comprise sending a PS Handover Command message to the mobile indicating that it should move to the new cell. The actual message sent will depend upon the type of network, or networks involved, but the effect is to instruct the mobile device to being a handover procedure. However, if the mobile device is not able to complete the handover to the new cell, for example, if the mobile device fails to detect an indication that it may transmit in the new cell, then the device is required to return to the old cell.

A problem with this arrangement is that the resources which were available in the old cell may no longer be still available. Existing timers are used for each resource, or temporary block flow (TBF), and these timers may have expired before the mobile has returned to the old cell, so the corresponding resources are released. Another disadvantage is that these timers may continue to run after the latest time at which the mobile could have returned to the old cell, so any resources which remain reserved for this time are being wasted by the network.

IEEE Standard for Local and metropolitan area networks; Part 16: Air Interface for Fixed and Mobile Broadband Wireless Access Systems; Amendment 2: Physical and Medium Access Control Layers for Combined Fixed and Mobile Operation in Licensed Bands and Corrigendum 1", 28 February 2006, pages 238-244; XP002450384 describes a handover process of a mobile station from one base station to another.

Technical Specification Group GERAN; Packet-switched handover for GERAN A/Gb mode; Stage 2 (Release 6)", 3GPP TS 43.129 V6.7.1, April 2006, Pages 1-71, XP002450385 describes a packet switched handover execution phase.

In accordance with the present invention, a method of packet switched handover in a mobile communication system, the method comprising sending a command to a mobile device, to handover from a source cell to a target cell in a network; wherein if the attempt of the mobile device to access the target cell is unsuccessful, the mobile device returns to the source cell; wherein the source cell sets a time period after the command to handover is sent, during which resources in the source cell remain accessible by the mobile device, wherein, when the time period is stopped due to the mobile device returning to the source cell, timers relating to temporary block flows of the mobile device are restarted.

The present invention ensures that resources in a source cell remain available for the mobile device to access, for long enough for the mobile device to return to the source cell if a handover fails.

Preferably, a timer is provided in the network to set the time period during which resources remain accessible.

A specific new timer in the network may be used, which for a GSM/general packet radio service (GPRS)/EDGE network is typically situated in the Base Station Subsystem (BSS).

Preferably, the time period is started when, or after the command to handover has been sent.

In one embodiment, the timer is started when, or after, the command to handover has been sent, but if an acknowledgment of the command to handover is requested, then alternatively, the time period starts after receipt of an acknowledgement of the command to handover, from the mobile device.

Preferably, on receipt of a failure indication at the source cell, the source cell sends a message to network entities informing them of the failure.

Preferably, a failure indication comprises one of receipt of user data at the source cell after the command to handover has been sent; receipt of a failure message from the mobile device; or failure to receive a requested acknowledgment.

While the timer is running, one option is that all of the existing resources continue to be allocated to the mobile, so that if it does return to the old cell, it is able to signal to the network that the handover has been unsuccessful and continue operating as before, but preferably, the available resources maintained at the source cell are the minimum necessary for the mobile device to indicate a failure of handover.

Preferably, at the start of the time period, all current timers relating to temporary block flows of the mobile device are stopped.

The invention is applicable to any mobile communication system dealing with handover of packet switched resources, but preferably, the communication system is GERAN.

For GERAN, the command to handover is a PS Handover Command, but, for example a different command may be used for handover between GSM/GPRS/EDGE networks and universal mobile telecommunications system (UMTS) networks.

An example of a method of packet switched handover will now be described with reference to the accompanying drawings in which:
Figure 1 illustrates a typical system in which the method of the present invention can be applied;
Figure 2 shows an example of message flow for a handover attempt;
Figure 3 illustrates message flows during timer operation;
Figure 4 shows an example of message exchanges in a failure situation; and,
Figure 5 illustrates use of an acknowledgement of a command to handover.

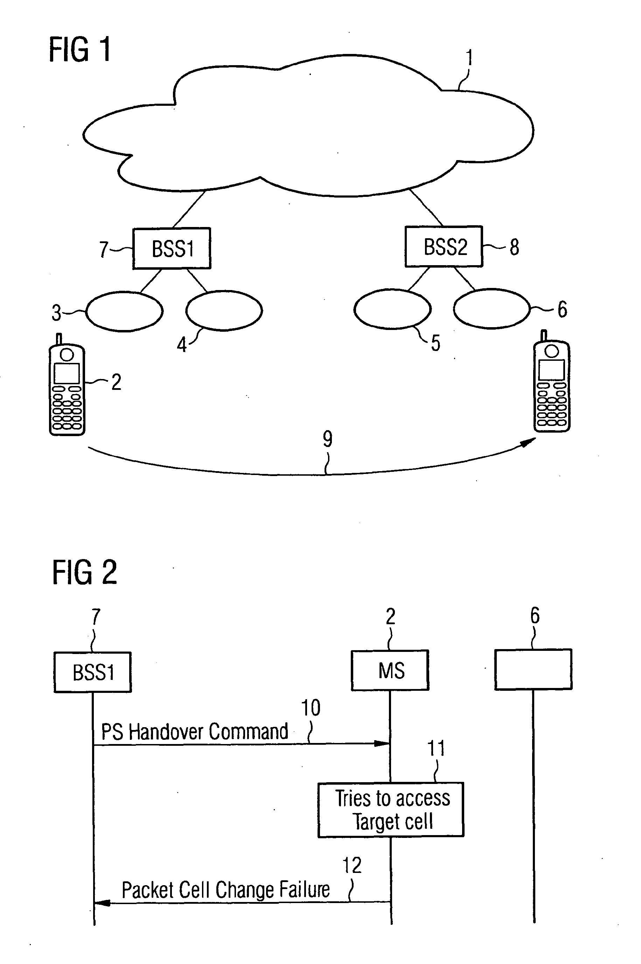

In the example of Fig. 1, a typical communications system setup is shown in which the method of the present invention can be applied. A network 1 communicates with a mobile device 2, via cells 3, 4, 5, 6. Each cell is under the control of one of a number of base stations 7, 8 connected to the network. Initially the mobile 2 is in cell 3 communicating with the network 1 via base station 7, but as the mobile moves, the network determines that cell 6, communicating via base station 8 is more appropriate and instructs the mobile to perform a handover.

Fig.2 shows a typical message exchange where a mobile device 2 is being handed over 9 to a new cell. The base station 7 of the source cell 3 sends a command 10 to the mobile 2. The uplink status flags (USF) in the source cell are not necessarily valid in the target cell, so in GERAN this command contains USF values, radio channels, and timeslot numbers which the mobile device should use in the target cell 6. For the example of GERAN, the base station is a source base station sub-system (BSS) and the BSS schedules opportunities for the mobile to transmit a radio link control/medium access control (RLC/MAC) control message. The handover command 10 is a PS Handover Command, but the precise format of the instruction message varies according to the communication system in which it is applied.

In this example, the mobile device 2 attempts 11 to access the target cell 6, but fails and so the mobile device returns to the source cell 3 and retunes to the radio channels and timeslot numbers which it had before, corresponding to old resources in the source cell and waits for the BSS to signal that the mobile may transmit data (which is indicated by the BSS sending a USF value corresponding to an uplink TBF or by polling using an existing downlink TBF). The mobile device sends a failure indication 12, in this example, a Packet Cell Change Failure message, to the source base station 7. The handover may fail due to the mobile device not detecting the USF, or due to the mobile device failing to receive extension information, or packet physical information subsequently in the target cell 6, despite detecting the USF successfully.

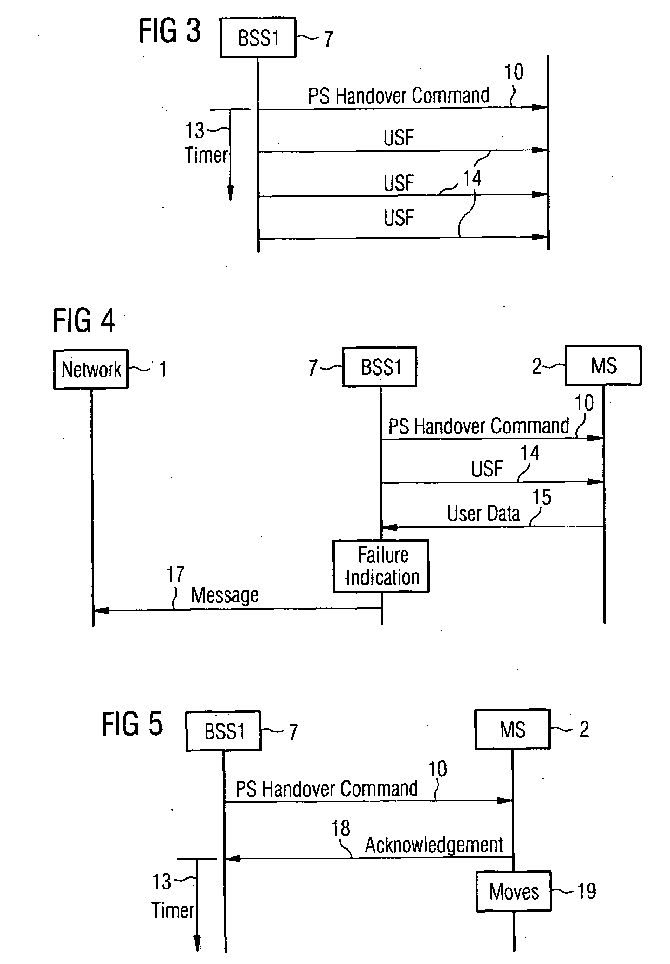

After the handover command 10 is sent and whilst the mobile device 2 is attempting to access the target cell 6, a timer 13 schedules USFs 14 for the mobile device as shown in Fig. 3. The USFs may allow the mobile to transmit its RLC/MAC control message by means of an existing uplink TBF which has not been released yet, or by polling using an existing downlink TBF, so that the mobile has time to send the failure indication. The BSS may not allocate as many transmission opportunities as it would have done had the mobile device remained connected to the source cell, but it allocates sufficient opportunities to allow the failure indication to be transmitted, should it be necessary.

If the handover command 10 is not actually received by the mobile device 2, as shown in Fig.4, then the USFs 14 keep being allocated until a failure indicator 16 is received at the source base station 7, for example receipt of user data 15. The source base station then sends out a message 17 to inform the network entities of the failure and if the handover is then cancelled, the cancellation notification ensures that resources are not held for too long. This failure to receive the handover command can be addressed as shown in Fig.5, which illustrates that the source base station may require an explicit acknowledgement 18 from the mobile device 2 before starting the time 13. The mobile station attempts to move 19 and the timer 13 is started.

There are a number of optional features provided with the invention. When a timer is started, all currently ongoing timers in the BSS relating to the mobile's TBFs are stopped or suspended. If the network requests acknowledgement of receipt of the PS Handover Command by the mobile, then the timer is only started on receipt of that acknowledgement. Since the resources must be maintained while the timer is running and, if the network did not request acknowledgement of the PS Handover Command message, the mobile may have failed to receive the PS Handover Command message, in which case the mobile may continue to send normal user data using these resources. Therefore, the network stops the timer on receipt of any data from the mobile, rather than just a message indicating explicitly that the handover attempt failed.

On receipt of a handover failure indication, the network may attempt to resend the PS Handover Command, or the network may perform the appropriate procedures to cancel the handover, such as inform the core network, target BSS, etc. When the timer is stopped because the mobile has returned to the old cell, or if the mobile has sent data having never left the old cell, then timers relating to the resources (TBFs) are re-started.

The advantages of this invention include the fact that the mobile is assured that resources will remain available in the old cell should the mobile fail to complete the handover successfully. The probability of any service interruption to the services using the PS resources is minimised and although the network keeps resources open to allow the mobile to return and indicate failure, the network does not keep resources any longer than necessary. For example, existing timers might result in the TBFs being maintained for 5 seconds, but an approximate setting for the timer in the present invention is 2.5 seconds.

The examples described refer to GERAN, but this invention is applicable to handover in any mobile communication system, such as WiMax (IEEE 802.16), (UMTS terrestrial RAN) UTRAN, or Enhanced UTRAN.

## Claims

1. A method of packet switched handover in a mobile communication system, the method comprising sending a command to a mobile device, to handover from a source cell to a target cell in a network; wherein if the attempt of the mobile device to access the target cell is unsuccessful, the mobile device returns to the source cell; wherein the source cell sets a time period after the command to handover is sen during which resources in the source cell remain accessible by the mobile device; **characterized in that**, when the time period is stopped due to the mobile device returning to the source cell, timers relating to temporary block flows of the mobile device are restarted.

2. A method according to claim 1, wherein a timer is provided in the network to set the time period during which resources remain accessible.

3. A method according to claim 1 or claim 2, wherein the time period is started when, or after the command to handover has been sent.

4. A method according to claim 1 or claim 2, wherein the time period starts after receipt of an acknowledgement of the command to handover, from the mobile device.

5. A method according to any preceding claim, wherein on receipt of a failure indication at the source cell, the source cell sends a message to network entities informing them of the failure.

6. A method according to any preceding claim, wherein a failure indication comprises one of receipt of user data at the source cell after the command to handover has been sent; receipt of a failure message from the mobile device; or failure to receive a requested acknowledgment.

7. A method according to any preceding claim, wherein the available resources maintained at the source cell are the minimum necessary for the mobile device to indicate a failure of handover.

8. A method according to any preceding claim, wherein at the start of the time period, all current timers relating to temporary block flows of the mobile device are stopped.

9. A method according to any preceding claim, wherein the communication system is GERAN

10. A method according to claim 9, wherein the command to handover is a PS Handover Command.

## Patentansprüche

1. Verfahren für paketvermitteltes Handover in einem Mobilkommunikationssystem, wobei das Verfahren das Senden eines Befehls für ein Handover von einer Ursprungszelle an eine Zielzelle in einem Netzwerk zu einem Mobilgerät umfasst, wobei das Mobilgerät, wenn sein Zugriffsversuch auf die Zielzelle erfolglos verläuft, zur Ursprungszelle zurückkehrt, wobei die Ursprungszelle, wenn der Befehl zum Handover gesendet wurde, einen Zeitraum festlegt, in dem Ressourcen in der Ursprungszelle für das Mobilgerät verfügbar bleiben, **dadurch gekennzeichnet, dass** Zeitgeber, die Temporary Block Flows (TBF) des Mobilgerätes betreffen, erneut gestartet werden, wenn der Zeitraum angehalten wird, weil das Mobilgerät zur Ursprungszelle zurückgekehrt ist.

2. Verfahren nach Anspruch 1, bei dem ein Zeitgeber in dem Netzwerk bereitgestellt wird, der den Zeitraum festlegt, in dem Ressourcen verfügbar bleiben.

3. Verfahren nach Anspruch 1 oder 2, bei dem der Zeitraum gestartet wird, wenn der Befehl zum Handover gesendet wird oder gesendet worden ist.

4. Verfahren nach Anspruch 1 oder 2, bei dem der Zeitraum startet, wenn eine Bestätigung des Befehls zum Handover von dem Mobilgerät empfangen wurde.

5. Verfahren nach einem der vorhergehenden Ansprüche, bei dem die Ursprungszelle, nachdem sie eine Störungsmeldung empfangen hat, eine Nachricht an Netzinstanzen sendet, die diese über die Störung informiert.

6. Verfahren nach einem der vorhergehenden Ansprüche, bei dem eine Störungsmeldung Folgendes umfasst: Empfangen von Benutzerdaten an der Ursprungszelle, nachdem der Befehl zum Handover gesendet wurde, Empfangen einer Störungsmeldung von dem Mobilgerät oder Nichtempfangen einer angeforderten Bestätigung.

7. Verfahren nach einem der vorhergehenden Ansprüche, bei dem es sich bei den an der Ursprungszelle verfügbar bleibenden Ressourcen um das erforderliche Minimum handelt, mit dem das Mobilgerät ein Nicht-Handover angeben kann.

8. Verfahren nach einem der vorhergehenden Ansprüche, bei dem zum Start des Zeitraums alle aktuellen Zeitgeber, die Temporary Block Flows des Mobilgerätes betreffen, angehalten werden.

9. Verfahren nach einem der vorhergehenden Ansprüche, bei dem es sich bei dem Kommunikationssystem um ein GERAN handelt.

10. Verfahren nach Anspruch 9, bei dem es sich bei dem Befehl zum Handover um einen Befehl zum paketvermittelten Handover handelt.

## Revendications

1. Procédé de transfert intercellulaire à commutation de paquets, le procédé consistant à envoyer une commande à un dispositif mobile, à passer d'une cellule-source à une cellule-cible dans un réseau, étant entendu que, si l'essai du dispositif mobile pour accéder à la cellule-cible échoue, le dispositif mobile revient à la cellule-source, étant entendu que la cellule-source fixe un intervalle de temps après que la commande de transfert intercellulaire a été envoyée, pendant lequel les ressources de la cellule-source restent accessibles au dispositif mobile, **caractérisé en ce que** l'intervalle de temps est stoppé par le fait que le dispositif mobile revient à la cellule-source, des temporisateurs relatifs à des flux temporaires de blocs du dispositif mobile étant relancés.

2. Procédé selon la revendication 1, dans lequel un temporisateur est prévu dans le réseau pour fixer l'intervalle de temps pendant lequel les ressources restent accessibles.

3. Procédé selon la revendication 1 ou la revendication 2, dans lequel l'intervalle de temps est lancé lorsque, ou après que la commande de transfert intercellulaire a été envoyée.

4. Procédé selon la revendication 1 ou la revendication 2, dans lequel l'intervalle de temps débute après la réception d'un accusé de réception de la commande de transfert intercellulaire, émanant du dispositif cellulaire.

5. Procédé selon l'une quelconque des revendications précédentes, dans lequel, à la réception d'un avis d'échec par la cellule-source, la cellule-source envoie un message à des entités du réseau pour les informer de l'échec.

6. Procédé selon l'une quelconque des revendications précédentes, dans lequel un avis d'échec consiste soit en la réception de données d'utilisateur par la cellule-source après que la commande de transfert intercellulaire a été envoyée, soit en la réception d'un message d'échec émanant du dispositif mobile, soit en la non-réception d'un accusé de réception requis.

7. Procédé selon l'une quelconque des revendications précédentes, dans lequel les ressources disponibles maintenues dans la cellule-source constituent le minimum nécessaire pour que le dispositif mobile indique un échec du transfert intercellulaire.

8. Procédé selon l'une quelconque des revendications précédentes, dans lequel, au début de l'intervalle de temps, tous les temporisateurs en cours relatifs à des flux temporaires de blocs du dispositif mobile sont arrêtés.

9. Procédé selon l'une quelconque des revendications précédentes, dans lequel le système de communication est le GERAN (réseau d'accès radio GSM-EDGE).

10. Procédé selon la revendication 9, dans lequel la commande de transfert intercellulaire est une commande de transfert intercellulaire à commutation de paquets (PS).
